# EUROPÄISCHE PATENTANMELDUNG

(11) **EP 4 825 622 A1**
(43) Veröffentlichungstag der Anmeldung: **21.10.2026**
(21) Anmeldenummer: 26171471.1
(22) Anmeldetag: 09.04.2026
(51) Int. Cl.: B60K 1/02, B60K 7/00, B60W 10/08, B60W 30/045, B60W 40/08, B60W 40/13, B60W 50/00

(54) **VERFAHREN UND EINRICHTUNG ZUR STEUERUNG EINES FAHRZEUGS ZUR WENDUNG AUF DER STELLE, GERÄT SOWIE SPEICHERMEDIUM**

(30) Priorität: 14.04.2025 CN 202510464692
(71) Anmelder: ZF Friedrichshafen AG, 88046 Friedrichshafen (DE)
(72) Erfinder: Luo, Zheng, 88046 Friedrichshafen (DE); Wang, Xiandong, 88046 Friedrichshafen (DE)
(74) Vertreter: ZF Friedrichshafen AG

(57) **Zusammenfassung**

Die Ausführungsbeispiele der vorliegenden Anmeldung stellen ein Verfahren und eine Einrichtung zur Steuerung eines Fahrzeugs zur Wendung auf der Stelle, ein Gerät sowie ein Speichermedium bereit. Das Verfahren umfasst: Ermitteln einer Masse auf einem Sitz im Fahrzeug und einer anfänglichen Belastung eines Rades in Reaktion auf eine Anweisung zur Wendung auf der Stelle, wobei die anfängliche Belastung auf der Grundlage einer tatsächlichen Radgeschwindigkeit des Rades und der Chassis-Dynamik berechnet wird; Bestimmen einer Zielbelastung des Rades auf der Grundlage der Masse auf dem Sitz und der anfänglichen Belastung des Rades; Bestimmen eines Antriebsmoments des Rades auf der Grundlage der Zielbelastung des Rades; und Steuern eines Antriebsmotors des Rades auf der Grundlage des Antriebsmoments des Rades, um eine Wendung des Fahrzeugs auf der Stelle zu ermöglichen. Das Verfahren wird dazu verwendet, die Wirkung der Steuerung einer Wendung auf der Stelle zu verbessern.

## Beschreibung

### Technisches Gebiet

Die vorliegende Anmeldung bezieht sich auf das technische Gebiet des intelligenten Fahrens, insbesondere auf ein Verfahren und eine Einrichtung zur Steuerung eines Fahrzeugs zur Wendung auf der Stelle, ein Gerät sowie ein Speichermedium.

### Stand der Technik

Bei einem dezentral angetriebenen Fahrzeug kann jedes Rad des Fahrzeugs von einem separaten Antriebsmotor unabhängig gesteuert werden. Indem die Antriebsmotoren auf einer Seite zum Vorwärtsfahren und die Antriebsmotoren auf der anderen Seite zum Rückwärtsfahren gesteuert werden, kann das Fahrzeug eine Wendung um seinen Massenmittelpunkt mit einem Radius von Null auf der Stelle ausführen.

Im Stand der Technik erfolgt die Steuerung einer Wendung auf der Stelle meistens dadurch, dass das Antriebsmoment einzelner Antriebsmotoren auf der Grundlage von Radgeschwindigkeit einzelner Räder gesteuert wird. Das Antriebsmoment für eine Wendung auf der Stelle wird jedoch nicht nur von der Radgeschwindigkeit, sondern auch von anderen Faktoren beeinflusst. Mit anderen Worten, auf diese Vorgehensweise werden Einflussfaktoren auf das Antriebsmoment für eine Wendung auf der Stelle nicht ausreichend berücksichtigt, was zu einem ungenauen Antriebsmoment und somit zu einer schlechten Wirkung der Steuerung der Wendung auf der Stelle führt.

### Offenbarung der Erfindung

Die Ausführungsbeispiele der vorliegenden Anmeldung stellen ein Verfahren und eine Einrichtung zur Steuerung eines Fahrzeugs zur Wendung auf der Stelle, ein Gerät sowie ein Speichermedium bereit, um die Wirkung der Steuerung einer Wendung auf der Stelle zu verbessern.

In einem ersten Aspekt stellt ein Ausführungsbeispiel der vorliegenden Anmeldung ein Verfahren zur Steuerung eines Fahrzeugs zur Wendung auf der Stelle bereit, das umfasst:
Ermitteln einer Masse auf einem Sitz im Fahrzeug und einer anfänglichen Belastung eines Rades in Reaktion auf eine Anweisung zur Wendung auf der Stelle, wobei die anfängliche Belastung auf der Grundlage einer tatsächlichen Radgeschwindigkeit des Rades und der Chassis-Dynamik berechnet wird;
Bestimmen einer Zielbelastung des Rades auf der Grundlage der Masse auf dem Sitz und der anfänglichen Belastung des Rades;
Bestimmen eines Antriebsmoments des Rades auf der Grundlage der Zielbelastung des Rades; und Steuern eines Antriebsmotors des Rades auf der Grundlage des Antriebsmoments des Rades, um eine Wendung des Fahrzeugs auf der Stelle zu ermöglichen.

In einer möglichen Ausführungsform ist vorgesehen, dass das Bestimmen eines Antriebsmoments des Rades auf der Grundlage der Zielbelastung des Rades umfasst:
Bestimmen eines Vorwärtskopplungsmoments und eines Rückkopplungsmoments des Rades auf der Grundlage der Zielbelastung des Rades; und
Bestimmen des Antriebsmoments des Rades auf der Grundlage des Vorwärtskopplungsmoments und des Rückkopplungsmoments des Rades.

In einer möglichen Ausführungsform ist vorgesehen, dass das Bestimmen eines Vorwärtskopplungsmoments des Rades auf der Grundlage der Zielbelastung des Rades umfasst:
Ermitteln eines Öffnungsgrades eines Beschleunigungspedals des Fahrzeugs, einer tatsächlichen Radgeschwindigkeit des Rades, einer Drehrichtung für die Wendung auf der Stelle und eines aktuellen Fahrbahn-Haftungskoeffizienten; und
Bestimmen des Vorwärtskopplungsmoments des Rades auf der Grundlage der Zielbelastung des Rades, des Öffnungsgrades, der tatsächlichen Radgeschwindigkeit des Rades, der Drehrichtung und des Fahrbahn-Haftungskoeffizienten.

In einer möglichen Ausführungsform ist vorgesehen, dass das Bestimmen des Vorwärtskopplungsmoments des Rades auf der Grundlage der Zielbelastung des Rades, des Öffnungsgrades, der tatsächlichen Radgeschwindigkeit des Rades, der Drehrichtung und des Fahrbahn-Haftungskoeffizienten umfasst:
Bestimmen eines zu der tatsächlichen Radgeschwindigkeit des Rades passenden Vorwärtskopplungs-Korrekturkoeffizienten des Rades und eines zu dem Öffnungsgrad passenden Fahrbedarfskoeffizienten;
Bestimmen eines Leistungsbedarfs des Rades auf der Grundlage der Zielbelastung des Rades, des Fahrbahn-Haftungskoeffizienten, des Vorwärtskopplungs-Korrekturkoeffizienten des Rades, des Öffnungsgrades und des Fahrbedarfskoeffizienten; und
Bestimmen des Vorwärtskopplungsmoments des Rades auf der Grundlage des Leistungsbedarfs und der Drehrichtung.

In einer möglichen Ausführungsform ist vorgesehen, dass das Bestimmen eines Rückkopplungsmoments des Rades auf der Grundlage der Zielbelastung des Rades umfasst:
Ermitteln einer Drehrichtung für eine Wendung des Fahrzeugs auf der Stelle sowie einer tatsächlichen Radgeschwindigkeit und einer Ziel-Radgeschwindigkeit des Rades;
Bestimmen eines zu der Zielbelastung des Rades passenden Vertikalkraft-Korrekturkoeffizienten des Rades; und Bestimmen eines zu der tatsächlichen Radgeschwindigkeit des Rades passenden Rückkopplungs-Korrekturkoeffizienten des Rades; und
Bestimmen des Rückkopplungsmoments des Rades auf der Grundlage des Vertikalkraft-Korrekturkoeffizienten des Rades, des Rückkopplungs-Korrekturkoeffizienten des Rades, der tatsächlichen Radgeschwindigkeit des Rades, der Ziel-Radgeschwindigkeit des Rades und der Drehrichtung.

In einer möglichen Ausführungsform ist vorgesehen, dass das Bestimmen des Rückkopplungsmoments des Rades auf der Grundlage des Vertikalkraft-Korrekturkoeffizienten des Rades, des Rückkopplungs-Korrekturkoeffizienten des Rades, der tatsächlichen Radgeschwindigkeit des Rades, der Ziel-Radgeschwindigkeit des Rades und der Drehrichtung umfasst:
Ermitteln eines anfänglichen Rückkopplungsmoments auf der Grundlage des Vertikalkraft-Korrekturkoeffizienten des Rades, der tatsächlichen Radgeschwindigkeit des Rades, der Ziel-Radgeschwindigkeit des Rades und eines voreingestellten Regelalgorithmus; und
Bestimmen des Rückkopplungsmoments des Rades auf der Grundlage des anfänglichen Rückkopplungsmoments, des Rückkopplungs-Korrekturkoeffizienten des Rades und der Drehrichtung.

In einer möglichen Ausführungsform ist vorgesehen, dass das Bestimmen des Antriebsmoments des Rades auf der Grundlage des Vorwärtskopplungsmoments und des Rückkopplungsmoments des Rades umfasst:
Ermitteln eines Vorwärtskopplungs-Gewichtungskoeffizienten und eines Rückkopplungs-Gewichtungskoeffizienten des Rades; und
Bestimmen des Antriebsmoments des Rades auf der Grundlage des Vorwärtskopplungs-Gewichtungskoeffizienten des Rades, des Rückkopplungs-Gewichtungskoeffizienten des Rades, des Vorwärtskopplungsmoments des Rades und des Rückkopplungsmoments des Rades.

In einer möglichen Ausführungsform ist vorgesehen, dass das Bestimmen einer Zielbelastung des Rades auf der Grundlage der Masse auf dem Sitz und der anfänglichen Belastung des Rades umfasst:
Eingeben der Masse auf dem Sitz und der anfänglichen Belastung des Rades in ein voreingestelltes Belastungsverteilungsmodell, wodurch die Zielbelastung des Rades ausgegeben wird.

In einer möglichen Ausführungsform ist vorgesehen, dass das Ermitteln einer Masse auf einem Sitz im Fahrzeug umfasst:
Ermitteln von Geschlecht und Körpertyp aller Insassen im Fahrzeug sowie deren Sitzen; und
Bestimmen der Masse auf dem Sitz auf der Grundlage des Geschlechtes und Körpertyps des Insassen sowie dessen Sitzes.

In einem zweiten Aspekt stellt ein Ausführungsbeispiel der vorliegenden Anmeldung eine Einrichtung zur Steuerung eines Fahrzeugs zur Wendung auf der Stelle bereit, die umfasst:
ein Ermittlungsmodul, das dazu verwendet wird, eine Masse auf einem Sitz im Fahrzeug und eine anfängliche Belastung eines Rades in Reaktion auf eine Anweisung zur Wendung auf der Stelle zu ermitteln, wobei die anfängliche Belastung auf der Grundlage einer tatsächlichen Radgeschwindigkeit des Rades und der Chassis-Dynamik berechnet wird;
ein Bestimmungsmodul, das dazu verwendet wird, eine Zielbelastung des Rades auf der Grundlage der Masse auf dem Sitz und der anfänglichen Belastung des Rades zu bestimmen; und
ein Steuerungsmodul, das dazu verwendet wird, ein Antriebsmoment des Rades auf der Grundlage der Zielbelastung des Rades zu bestimmen; und einen Antriebsmotor des Rades auf der Grundlage des Antriebsmoments des Rades zu steuern, um eine Wendung des Fahrzeugs auf der Stelle zu ermöglichen.

In einem dritten Aspekt stellt ein Ausführungsbeispiel der vorliegenden Anmeldung ein elektronisches Gerät bereit, das umfasst: einen Speicher und einen Prozessor,
wobei in dem Speicher computerausführbare Anweisungen gespeichert sind,
und wobei der Prozessor die in dem Speicher gespeicherten computerausführbaren Anweisungen ausführt, um das Durchführen des ersten Aspekts und/oder der verschiedenen möglichen Ausführungsformen im ersten Aspekt durch den Prozessor zu ermöglichen.

In einem vierten Aspekt stellt ein Ausführungsbeispiel der vorliegenden Anmeldung ein computerlesbares Speichermedium bereit, wobei in dem computerlesbaren Speichermedium computerausführbare Anweisungen gespeichert sind, die bei ihrem Ausführen durch einen Prozessor zur Implementierung des ersten Aspekts und/oder der verschiedenen möglichen Ausführungsformen im ersten Aspekt verwendet werden.

In einem fünften Aspekt stellt ein Ausführungsbeispiel der vorliegenden Anmeldung ein Computerprogrammprodukt bereit, das ein Computerprogramm umfasst, wobei das Computerprogramm bei seinem Ausführen durch einen Prozessor den ersten Aspekt und/oder die verschiedenen möglichen Ausführungsformen im ersten Aspekt implementiert.

Bei dem Verfahren und der Einrichtung zur Steuerung eines Fahrzeugs zur Wendung auf der Stelle, dem Gerät sowie dem Speichermedium gemäß den Ausführungsbeispielen der vorliegenden Anmeldung wird eine Zielbelastung des Rades in Reaktion auf eine Anweisung zur Wendung auf der Stelle durch Ermitteln einer Masse auf einem Sitz im Fahrzeug und einer anfänglichen Belastung eines Rades bestimmt. Anschließend wird ein Antriebsmoment des Rades auf der Grundlage der Zielbelastung des Rades bestimmt. Schließlich wird ein Antriebsmotor des Rades auf der Grundlage des Antriebsmoments des Rades gesteuert, um eine Wendung des Fahrzeugs auf der Stelle zu ermöglichen. Auf diese Weise kann das Chassis-Domänen-Steuergerät bei einer Wendung des Fahrzeugs auf der Stelle nicht nur den Einfluss der Radgeschwindigkeit des Rades auf das Antriebsmoment, sondern auch den Einfluss der Massenverteilung in der Fahrzeugkabine auf das Antriebsmoment berücksichtigen. Dies erhöht die Genauigkeit des Antriebsmoments des Rades und verbessert dadurch die Wirkung der Steuerung der Wendung auf der Stelle.

### Kurzbeschreibung der Figuren

Die Zeichnungen hierin sind in die Beschreibung aufgenommen und bilden einen Teil dieser Beschreibung. Dabei zeigen sie die der vorliegenden Anmeldung entsprechenden Ausführungsbeispiele und dienen zusammen mit der Beschreibung zur Erläuterung der Prinzipien der vorliegenden Anmeldung.
Fig. 1 zeigt eine schematische Darstellung eines Anwendungsszenarios nach einem Ausführungsbeispiel der vorliegenden Anmeldung;
Fig. 2 zeigt ein erstes schematisches Flussdiagramm eines Verfahrens zur Steuerung eines Fahrzeugs zur Wendung auf der Stelle gemäß der vorliegenden Anmeldung;
Fig. 3 zeigt ein zweites schematisches Flussdiagramm des Verfahrens zur Steuerung eines Fahrzeugs zur Wendung auf der Stelle gemäß der vorliegenden Anmeldung;
Fig. 4 zeigt eine schematische Strukturdarstellung einer Einrichtung zur Steuerung eines Fahrzeugs zur Wendung auf der Stelle gemäß der vorliegenden Anmeldung; und
Fig. 5 zeigt eine schematische Strukturdarstellung eines elektronischen Geräts gemäß der vorliegenden Anmeldung.

In den obigen Zeichnungen sind konkrete Ausführungsbeispiele der vorliegenden Anmeldung dargestellt. Im Folgenden werden diese noch näher beschrieben. Die Zeichnungen und Texte hierhin dienen nicht dazu, den Umfang der Idee der vorliegenden Anmeldung in irgendeiner Weise einzuschränken, sondern dazu, den Fachleuten auf diesem Gebiet den Kontext der vorliegenden Anmeldung unter Bezugnahme auf spezifische Ausführungsbeispiele der vorliegenden Anmeldung zu erläutern.

### Ausführliche Ausführungsformen

Nun werden beispielhafte Ausführungsbeispiele im Detail beschrieben, die in den Zeichnungen beispielhaft dargestellt sind. In der nachfolgenden Beschreibung, die sich auf die Zeichnungen bezieht, bezeichnen die gleichen Bezugszeichen in den verschiedenen Zeichnungen die gleichen oder ähnlichen Elemente, sofern nichts anderes angegeben ist. Die in den folgenden beispielhaften Ausführungsbeispielen beschriebenen Ausführungsformen stellen nicht alle mit der vorliegenden Anmeldung übereinstimmenden Ausführungsformen dar. Vielmehr handelt es sich dabei lediglich um Beispiele für die Einrichtungen und Verfahren, die mit einigen, in den beigefügten Ansprüchen beschriebenen Aspekten der vorliegenden Anmeldung übereinstimmen.

Bei einer Steuerung einer Wendung auf der Stelle wird das Antriebsmoment einzelner Räder meistens auf der Grundlage von Ziel-Radgeschwindigkeit einzelner Räder bestimmt und der Antriebsmotor des jeweiligen Rades wird so gesteuert, dass er das Antriebsmoment des jeweiligen Rades ausführt, um eine Wendung auf der Stelle zu ermöglichen. Das Antriebsmoment für eine Wendung auf der Stelle wird jedoch nicht nur von der Radgeschwindigkeit, sondern auch von anderen Faktoren beeinflusst. Mit anderen Worten, auf diese Vorgehensweise werden Einflussfaktoren auf das Antriebsmoment für eine Wendung auf der Stelle nicht ausreichend berücksichtigt, was zu einem ungenauen Antriebsmoment und somit zu einer schlechten Wirkung der Steuerung der Wendung auf der Stelle führt.

In Anbetracht dessen stellt die vorliegende Anmeldung ein Verfahren zur Steuerung eines Fahrzeugs zur Wendung auf der Stelle bereit, bei dem nicht nur der Einfluss der Radgeschwindigkeit auf das Antriebsmoment, sondern auch der Einfluss der Massenverteilung in der Fahrzeugkabine auf das Antriebsmoment berücksichtigt wird. Dies erhöht die Genauigkeit des Antriebsmoments und verbessert dadurch die Wirkung der Steuerung der Wendung auf der Stelle.

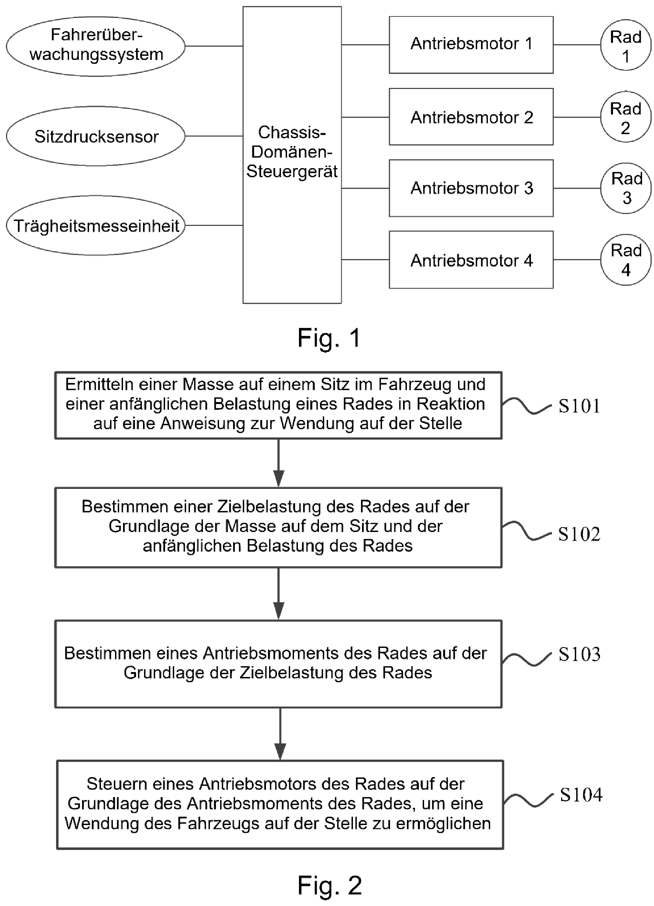

Fig. 1 zeigt eine schematische Darstellung eines Anwendungsszenarios nach einem Ausführungsbeispiel der vorliegenden Anmeldung. Wie in Fig. 1 gezeigt, umfasst ein Fahrzeug ein Chassis-Domänen-Steuergerät und mehrere Antriebsmotoren, die entsprechend den Rädern angeordnet sind. Optional kann das Fahrzeug ferner ein Fahrerüberwachungssystem (Englisch: Driver Monitoring System, DMS), eine Kabinenkamera, einen Sitzdrucksensor, eine Trägheitsmesseinheit (Englisch: Inertial Measurement Unit, IMU) und dergleichen umfassen. Es ist darauf hinzuweisen, dass in Fig. 1 ein Beispiel mit vier Antriebsmotoren schematisch dargestellt ist.

Das oben genannte Chassis-Domänen-Steuergerät wird dazu verwendet, auf der Grundlage der von verschiedenen Sensoren erfassten Daten eine Belastung am Radende zu bestimmen und den Antriebsmotor der einzelnen Räder zu steuern, um eine Wendung des Fahrzeugs auf der Stelle zu ermöglichen. Die Ausführungsinstanz der Ausführungsbeispiele der vorliegenden Anmeldung kann das Chassis-Domänen-Steuergerät des Fahrzeugs sein.

Der oben genannte Antriebsmotor wird dazu verwendet, Anweisungen vom Chassis-Domänen-Steuergerät zu empfangen und das entsprechende Rad zur Drehung anzutreiben.

Das oben genannte Fahrerüberwachungssystem wird dazu verwendet, den Zustand des Fahrers über Geräte wie Kameras zu überwachen.

Die oben genannte Kabinenkamera wird dazu verwendet, die Situation innerhalb der Kabine, wie z. B. die Position und das Verhalten der Insassen, zu überwachen.

Der oben genannte Sitzdrucksensor wird dazu verwendet, die Druckverteilung auf dem Sitz zu erfassen.

Die oben genannte Trägheitsmesseinheit, einschließlich der Sensoren wie Beschleunigungsmesser und Gyroskope, wird dazu verwendet, die Beschleunigung und Winkelgeschwindigkeit des Fahrzeugs im dreidimensionalen Raum zu messen.

Im Folgenden wird anhand konkreter Ausführungsbeispiele detailliert beschrieben, wie die technische Lösung der vorliegenden Anmeldung aussieht und wie die technische Lösung der vorliegenden Anmeldung die oben genannten technischen Probleme löst. Die folgenden konkreten Ausführungsbeispiele können miteinander kombiniert werden, und in einigen Ausführungsbeispielen werden gleiche oder ähnliche Konzepte oder Prozesse möglicherweise nicht wiederholt. Die Ausführungsbeispiele der vorliegenden Anmeldung werden nachstehend in Verbindung mit den beigefügten Zeichnungen beschrieben.

Fig. 2 zeigt ein erstes schematisches Flussdiagramm des Verfahrens zur Steuerung eines Fahrzeugs zur Wendung auf der Stelle gemäß der vorliegenden Anmeldung. Wie in Fig. 2 gezeigt, umfasst das Verfahren:
S101: Ermitteln einer Masse auf einem Sitz im Fahrzeug und einer anfänglichen Belastung eines Rades in Reaktion auf eine Anweisung zur Wendung auf der Stelle.

Die oben genannte Anweisung zur Wendung auf der Stelle kann eine Drehrichtung für die Wendung auf der Stelle enthalten. Die Anweisung zur Wendung auf der Stelle kann entweder vom Benutzer über ein Bordgerät oder vom Chassis-Domänen-Steuergerät auf der Grundlage einer Navigationsroute automatisch ausgelöst werden.

Die oben genannte Masse auf einem Sitz kann eine Massenverteilung in der Fahrzeugkabine charakterisieren. Die Masse auf einem Sitz kann die Masse auf jedem der Sitze sein. Diesbezüglich stellen die Ausführungsbeispiele der vorliegenden Anmeldung keine Einschränkungen dar, und spezifische Konfigurationen können entsprechend den praktischen Anforderungen festgelegt werden. In einer möglichen Implementierung ist vorgesehen, dass unter jedem der Sitze des Fahrzeugs ein hochpräziser Drucksensor eingebaut ist. Diese Sensoren können jeweils einen auf dem jeweiligen Sitz ausgeübten Druck in Echtzeit erfassen und wandeln ihre Drucksignale mittels eines Druck-zu-Masse-Umwandlungsalgorithmus in entsprechende Massenwerte um, wodurch die Masse auf jedem der Sitze ermittelt wird. In einer weiteren möglichen Implementierung ist vorgesehen, dass Bilder des Fahrers und der Insassen über ein im Fahrzeug eingebautes Bildaufnahmegerät aufgenommen werden können und dann die Massen des Fahrers und der Insassen auf der Grundlage der aufgenommenen Bilder vorhergesagt werden, um die Masse auf dem Sitz zu ermitteln. Dabei kann das Bildaufnahmegerät die Kamera, die Kabinenkamera oder dergleichen in dem oben genannten Fahrerüberwachungssystem sein.

Die anfängliche Belastung wird auf der Grundlage einer tatsächlichen Radgeschwindigkeit des Rades und der Chassis-Dynamik berechnet. Beispielhaft kann an der Radnabe jedes der Räder ein Radgeschwindigkeitssensor eingebaut sein, so dass die tatsächliche Radgeschwindigkeit des Rades in Echtzeit überwacht werden kann. Zudem werden Parameter bezüglich der Chassis-Dynamik, wie Beschleunigung, Neigungswinkel und dergleichen, des Fahrzeugs auf der Grundlage der IMU ermittelt. Durch Eingabe der tatsächlichen Radgeschwindigkeit, der Beschleunigung, des Neigungswinkels und dergleichen in ein vorab erstelltes Chassis-Dynamikmodell ergibt sich dann die anfängliche Belastung jedes der Räder in einem aktuellen Fahrzustand. Dabei kann dieses Modell auf den Newtonschen Bewegungsgesetzen und den Prinzipien der Fahrzeugdynamik basieren. Hier stellt die vorliegende Anmeldung keine Einschränkungen für die Berechnung der anfänglichen Belastung dar.

S102: Bestimmen einer Zielbelastung des Rades auf der Grundlage der Masse auf dem Sitz und der anfänglichen Belastung des Rades.

Beispielhaft charakterisiert die zuvor erwähnte Zielbelastung des Rades eine Vertikalkraft an jedem der Räder.

In einer möglichen Implementierung ist vorgesehen, dass das Chassis-Domänen-Steuergerät zunächst auf der Grundlage der Masse auf jedem der Sitze eine infolge der Masse auf dem Sitz erhöhte, zusätzliche Belastung für jedes der Räder bestimmen kann. Anschließend legt es für jedes der Räder einen Summenwert aus der zusätzlichen Belastung und der anfänglichen Belastung des jeweiligen Rades als Zielbelastung dieses Rades fest. Beispielhaft kann das Chassis-Domänen-Steuergerät einen auf die einzelnen Räder verteilten Anteil der Masse auf jedem der Sitze im Fahrzeug auf der Grundlage von Konstruktionsparametern und Position des Schwerpunkts des Fahrzeugs bestimmen. Bei einem Fahrzeug mit Frontantrieb können beispielsweise Vorderräder einen größeren Anteil der Sitzmasse übernehmen. Daher können zusätzliche Belastungen des linken Vorderrads und des rechten Vorderrads die Masse auf allen Sitzen in der Fahrkabine sowie einen Anteil der Masse auf den Sitzen in der Insassenkabine umfassen, wodurch die zusätzlichen Belastungen des linken Vorderrads und des rechten Vorderrads sowie zusätzliche Belastungen des linken Hinterrads und des rechten Hinterrads ermittelt werden können. Anschließend wird auf der Grundlage der anfänglichen Belastung der einzelnen Räder die Belastung am Radende für jedes der Räder ermittelt.

In einer weiteren möglichen Implementierung ist vorgesehen, dass das Chassis-Domänen-Steuergerät ein Belastungsverteilungsmodell voreinstellen und die Masse auf jedem der Sitze sowie die anfängliche Belastung des Rades in dieses Belastungsverteilungsmodell eingeben kann, wodurch die Zielbelastung jedes der Räder ausgegeben wird. Dabei wird dieses Belastungsverteilungsmodell vorab anhand von Probendaten vortrainiert und somit erstellt.

Beispielhaft werden mehrere Kombinationsszenarien von Massen auf verschiedenen Sitzen (Massen auf Probensitzen) erstellt. Dann werden anfängliche Probenbelastungsdaten jedes der Räder und in Echtzeit gemessene Vertikalkräfte an einzelnen Reifen (Ziel-Probenbelastungsdaten) unter mehreren Fahrbedingungen mit verschiedenen Querbeschleunigungen und Längsbeschleunigungen aufgezeichnet. Anschließend kann das anfängliche Belastungsverteilungsmodell auf der Grundlage der Masse auf dem Probensitz, der anfänglichen Probenbelastungsdaten und der Ziel-Probenbelastungsdaten trainiert werden, um ein trainiertes Belastungsverteilungsmodell zu erhalten. Dabei können die Vertikalkräfte an den einzelnen Reifen mittels eines an dem jeweiligen Rad des Testfahrzeugs eingebauten Sechs-Komponenten-Reifenkraftprüfgeräts gemessen werden.

Es ist darauf hinzuweisen, dass das Belastungsverteilungsmodell ein neuronales Netzwerkmodell oder andere Deep-Learning-Modelle und dergleichen sein kann. Diesbezüglich stellen die Ausführungsbeispiele der vorliegenden Anmeldung keine Einschränkungen dar.

S103: Bestimmen eines Antriebsmoments des Rades auf der Grundlage der Zielbelastung des Rades.

Beispielhaft charakterisiert das Antriebsmoment das Moment, das der Antriebsmotor auf das Rad ausübt, um eine Drehung des Rades zu bewirken.

In einer möglichen Implementierung ist vorgesehen, dass das Chassis-Domänen-Steuergerät ein Reifenmomentenmodell voreinstellen und einen in Echtzeit ermittelten Fahrbahn-Haftungskoeffizienten sowie die Zielbelastung des Rades in dieses Reifenmomentenmodell eingeben kann, wodurch das Antriebsmoment jedes der Räder ausgegeben wird. Dabei kann das Reifenmomentenmodell ein neuronales Netzwerkmodell oder andere Deep-Learning-Modelle und dergleichen sein. Diesbezüglich stellen die Ausführungsbeispiele der vorliegenden Anmeldung keine Einschränkungen dar.

In einer weiteren möglichen Implementierung ist vorgesehen, dass das Chassis-Domänen-Steuergerät ein Vorwärtskopplungsmoment auf der Grundlage aktuelles Öffnungsgrades des Beschleunigungspedals und der Zielbelastung der einzelnen Räder bestimmen kann, wobei das Vorwärtskopplungsmoment schnell auf die Absicht des Fahrers, auf der Stelle zu wenden, nämlich auf den Öffnungsgrad des Beschleunigungspedals, reagieren kann; und dass es mittels eines Proportional-Integral-Differential-Regelalgorithmus (Englisch: Proportional-Integral-Derivative Control, PID-Regelung) auf der Grundlage der Ziel-Radgeschwindigkeit und der tatsächlichen Radgeschwindigkeit der einzelnen Räder ein Rückkopplungsmoment bestimmt und das Vorwärtskopplungsmoment anpasst, um ein endgültiges Antriebsmoment jedes der Räder zu ermitteln.

S104: Steuern eines Antriebsmotors des Rades auf der Grundlage des Antriebsmoments des Rades, um eine Wendung des Fahrzeugs auf der Stelle zu ermöglichen.

Beispielhaft kann das Chassis-Domänen-Steuergerät das berechnete Antriebsmoment jedes der Räder in eine entsprechende Steueranweisung für den Antriebsmotor umwandeln und diese an den jeweiligen Antriebsmotor übertragen. Der Antriebsmotor steuert dann die Drehung des Rades auf der Grundlage der empfangenen Steueranweisung, wodurch eine Wendung des Fahrzeugs auf der Stelle erfolgt. Dabei kann die Steueranweisung Parameter wie Drehzahl, Drehmomentabgaberichtung und - größe des Motors und dergleichen umfassen.

Beim Verfahren zur Steuerung eines Fahrzeugs zur Wendung auf der Stelle gemäß den Ausführungsbeispielen der vorliegenden Anmeldung wird eine Zielbelastung des Rades in Reaktion auf eine Anweisung zur Wendung auf der Stelle durch Ermitteln einer Masse auf einem Sitz im Fahrzeug und einer anfänglichen Belastung eines Rades bestimmt. Anschließend wird ein Antriebsmoment des Rades auf der Grundlage der Zielbelastung des Rades bestimmt. Schließlich wird ein Antriebsmotor des Rades auf der Grundlage des Antriebsmoments des Rades gesteuert, um eine Wendung des Fahrzeugs auf der Stelle zu ermöglichen. Auf diese Weise kann das Chassis-Domänen-Steuergerät bei einer Wendung des Fahrzeugs auf der Stelle nicht nur den Einfluss der Radgeschwindigkeit des Rades auf das Antriebsmoment, sondern auch den Einfluss der Massenverteilung in der Fahrzeugkabine auf das Antriebsmoment berücksichtigen. Dies erhöht die Genauigkeit des Antriebsmoments des Rades und verbessert dadurch die Wirkung der Steuerung der Wendung auf der Stelle.

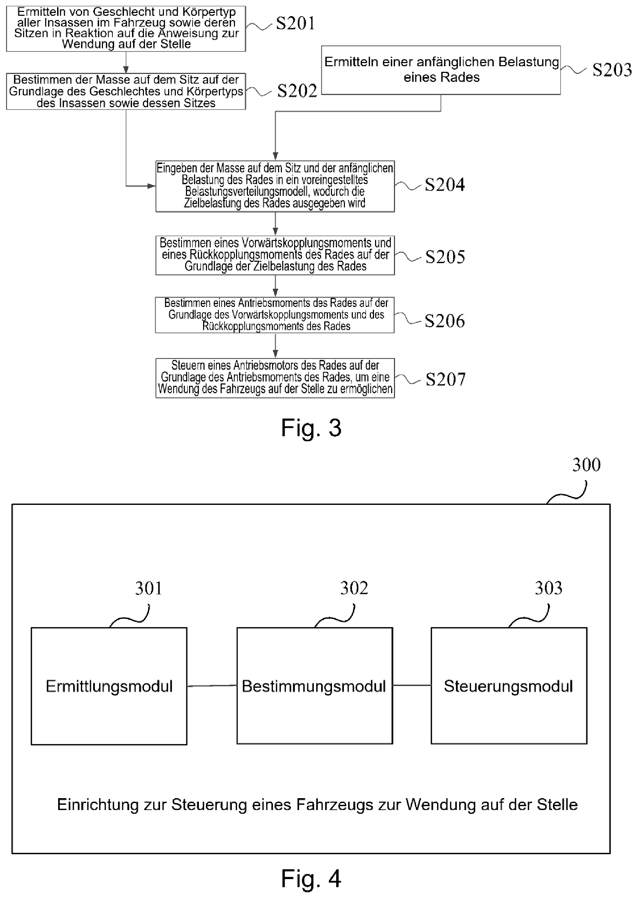

Fig. 3 zeigt ein zweites schematisches Flussdiagramm des Verfahrens zur Steuerung eines Fahrzeugs zur Wendung auf der Stelle gemäß der vorliegenden Anmeldung. Wie in Fig. 3 gezeigt, wird in diesem Ausführungsbeispiel das Verfahren zur Steuerung eines Fahrzeugs zur Wendung auf der Stelle basierend auf dem Ausführungsbeispiel aus Fig. 2 in Details beschrieben. Das Verfahren umfasst:

S201: Ermitteln von Geschlecht und Körpertyp aller Insassen im Fahrzeug sowie deren Sitzen in Reaktion auf die Anweisung zur Wendung auf der Stelle.

Beispielhaft beschreibt der Körpertyp den Gewichtsstatus eines Insassen und kann beispielsweise einen schlanken, normalen, dicken und fettleibigen Körpertyp und dergleichen umfassen. Es ist darauf hinzuweisen, dass alle Insassen den Fahrer einschließen. Die Kameras in dem Fahrerüberwachungssystem können Bilder des Fahrers aufnehmen, wodurch das Chassis-Domänen-Steuergerät das Geschlecht und den Körpertyp des Fahrers auf der Grundlage eines voreingestellten Bilderkennungsmodells erkennen kann. Für jeden Sitz außer dem Fahrersitz kann das Chassis-Domänen-Steuergerät nach dem Feststellen der Anwesenheit eines Insassen auf dem jeweiligen Sitz auf der Grundlage von Werten des Sitzdrucksensors Bilder dieses Insassen anhand der Kabinenkamera aufnehmen. Dann erkennt es auf der Grundlage des voreingestellten Bilderkennungsmodells das Geschlecht und den Körpertyp dieses Insassen sowie dessen Sitz, beispielsweise "Fahrersitz - männlich - dick".

Es ist darauf hinzuweisen, dass die Ausführungsbeispiele der vorliegenden Anmeldung keine Einschränkungen hinsichtlich der Art des Bilderkennungsmodells darstellen.

S202: Bestimmen der Masse auf dem Sitz auf der Grundlage des Geschlechtes und Körpertyps des Insassen sowie dessen Sitzes.

Beispielhaft kann das Chassis-Domänen-Steuergerät eine Zuordnungsbeziehung zwischen einerseits dem Geschlecht, dem Körpertyp und andererseits der Masse voreinstellen. Anschließend kann es das Geschlecht und den Körpertyp eines Insassen durch das Erkennen der aufgenommenen Bilder des Insassen bestimmen und danach die Masse des Insassen auf der Grundlage dieser Zuordnungsbeziehung bestimmen. In Kombination mit dem Sitz dieses Insassen legt es die Masse dieses Insassen als die Masse auf dessen Sitz fest, zum Beispiel "Fahrersitz - Masse 3". Diese Zuordnungsbeziehung kann beispielsweise in Tabelle 1 dargestellt sein. Es ist darauf hinzuweisen, dass diese Zuordnungsbeziehung als Beispiel dient und die vorliegende Anmeldung keine Einschränkungen diesbezüglich darstellt.

**Tabelle 1: Zuordnungsbeziehung**

| Geschlecht | Körpertyp | Masse |
|---|---|---|
| männlich | schlank | Masse 1 |
| | normal | Masse 2 |
| | dick | Masse 3 |
| | fettleibig | Masse 4 |
| weiblich | schlank | Masse 5 |
| | normal | Masse 6 |
| | dick | Masse 7 |
| | fettleibig | Masse 8 |

Auf diese Weise kann das Chassis-Domänen-Steuergerät die Massenverteilung in der Fahrzeugkabine auf der Grundlage vorhandener Sensoren und Bildaufnahmegeräte im Fahrzeug ermitteln, wodurch keine spezielle hochpräzise Drucksensoren eingebaut werden müssen und die Kosten gesenkt werden.

S203: Ermitteln einer anfänglichen Belastung eines Rades.

Es ist darauf hinzuweisen, dass dieser Schritt ähnlich wie der zuvor erwähnte Schritt S101 ist und hier nicht wiederholt wird.

S204: Eingeben der Masse auf dem Sitz und der anfänglichen Belastung des Rades in ein voreingestelltes Belastungsverteilungsmodell, wodurch die Zielbelastung des Rades ausgegeben wird.

Es ist darauf hinzuweisen, dass dieser Schritt ähnlich wie der zuvor erwähnte Schritt S102 ist und hier nicht wiederholt wird.

S205: Bestimmen eines Vorwärtskopplungsmoments und eines Rückkopplungsmoments des Rades auf der Grundlage der Zielbelastung des Rades.

Beispielhaft handelt es sich bei dem oben genannten Vorwärtskopplungsmoment um ein Moment, das im Voraus auf der Grundlage von Eingabeinformationen des Fahrers und einem vorab erstellten Modell oder Erfahrungen berechnet und auf das Rad ausgeübt wird. Dies stellt eine Open-Loop-Regelungsmethode dar, die von der Rückmeldung der tatsächlichen Abgabe unabhängig ist. Durch dieses Vorwärtskopplungsmoment kann eine initiale Anpassung in einer schnellen Reaktion auf eine Anweisung zur Wendung auf der Stelle durchgeführt werden, so dass sich das Rad so schnell wie möglich dem Zielzustand annähern kann und somit an verschiedene Bedingungsänderungen bei der Wendung des Fahrzeugs auf der Stelle anpasst, so dass die Reaktionszeit des Systems verkürzt und der Verfolgungsfehler reduziert wird.

In einigen möglichen Implementierungen ist vorgesehen, dass das Chassis-Domänen-Steuergerät einen Öffnungsgrad eines Beschleunigungspedals des Fahrzeugs, eine tatsächliche Radgeschwindigkeit des Rades, eine Drehrichtung für die Wendung auf der Stelle und einen aktuellen Fahrbahn-Haftungskoeffizienten ermitteln kann; und dass es das Vorwärtskopplungsmoment des Rades auf der Grundlage der Zielbelastung des Rades, des Öffnungsgrades, der tatsächlichen Radgeschwindigkeit des Rades, der Drehrichtung und des Fahrbahn-Haftungskoeffizienten bestimmt. Beispielsweise kann das Chassis-Domänen-Steuergerät eine Zuordnungsbeziehung zwischen einerseits der Zielbelastung des Rades, des Öffnungsgrades, der tatsächlichen Radgeschwindigkeit des Rades, der Drehrichtung bzw. dem Fahrbahn-Haftungskoeffizienten und andererseits dem Vorwärtskopplungsmoment voreinstellen. Anschließend kann der Öffnungsgrad des Beschleunigungspedals durch einen Wegsensor, die tatsächliche Radgeschwindigkeit jedes der Räder durch einen Radgeschwindigkeitssensor bzw. die durch diese Anweisung angegebene Drehrichtung durch die Anweisung zur Wendung auf der Stelle ermittelt werden. Darüber hinaus wird der aktuelle Fahrbahn-Haftungskoeffizient auf der Grundlage der Chassis-Dynamik berechnet. Anschließend kann das Vorwärtskopplungsmoment jedes der Räder auf der Grundlage dieser Zuordnungsbeziehung bestimmt werden.

Insbesondere kann das Chassis-Domänen-Steuergerät einen zu der tatsächlichen Radgeschwindigkeit des Rades passenden Vorwärtskopplungs-Korrekturkoeffizienten des Rades und einen zu dem Öffnungsgrad passenden Fahrbedarfskoeffizienten bestimmen. Dann bestimmt es einen Leistungsbedarf des Rades auf der Grundlage der Zielbelastung des Rades, des Fahrbahn-Haftungskoeffizienten, des Vorwärtskopplungs-Korrekturkoeffizienten des Rades, des Öffnungsgrades und des Fahrbedarfskoeffizienten. Anschließend bestimmt es das Vorwärtskopplungsmoment des Rades auf der Grundlage des Leistungsbedarfs und der Drehrichtung.

Beispielhaft ist in dem Chassis-Domänen-Steuergerät eine Zuordnungstabelle zwischen der Radgeschwindigkeit und dem Vorwärtskopplungs-Korrekturkoeffizienten vorab gespeichert. Durch den Vorwärtskopplungs-Korrekturkoeffizienten können Änderungen hinsichtliche des Leistungsbedarfs, die durch Änderungen der Radgeschwindigkeit verursacht werden, ausgeglichen werden, so dass die Antriebskraft für jedes der Räder präzis angepasst, eine rationelle Leistungsverteilung des Fahrzeugs gewährleistet und ein Leistungsungleichgewicht aufgrund unterschiedlicher Radgeschwindigkeiten vermieden wird. In diesem Chassis-Domänen-Steuergerät ist ferner eine Zuordnungstabelle zwischen dem Öffnungsgrad des Beschleunigungspedals und dem Fahrbedarfskoeffizienten vorab erstellt. Der Fahrbedarfskoeffizient kann den Bedarf des Fahrers an Fahrzeugleistung widerspiegeln, d. h., die Fahrabsicht für eine Wendung auf der Stelle, beispielsweise eine schnelle oder langsame Wendung und dergleichen.

Anschließend kann das Chassis-Domänen-Steuergerät den Vorwärtskopplungs-Korrekturkoeffizienten jedes der Räder und den Fahrbedarfskoeffizienten auf der Grundlage der oben genannten Zuordnungstabellen bestimmen. Ferner ist vorgesehen, dass es den Leistungsbedarf jedes der Räder auf der Grundlage der Zuordnungsbeziehung zwischen einerseits der Zielbelastung des Rades, dem Fahrbahn-Haftungskoeffizienten, dem Vorwärtskopplungs-Korrekturkoeffizienten des Rades, dem Öffnungsgrad, dem Fahrbedarfskoeffizienten und andererseits dem Leistungsbedarf bestimmen kann. Dann kann es einen Drehkoeffizienten jedes der Räder auf der Grundlage der Drehrichtung bestimmen. Anschließend ermittelt es das Vorwärtskopplungsmoment jedes der Räder auf der Grundlage des Leistungsbedarfs und des Drehkoeffizienten jedes der Räder. Dabei charakterisiert der Drehkoeffizient jedes der Räder dessen Drehrichtung. Wenn beispielsweise die vom Benutzer eingegebene Anweisung zur Wendung auf der Stelle eine Drehrichtung im Uhrzeigersinn angibt, betragen der Drehkoeffizient des linken Vorderrades und der Drehkoeffizient des linken Hinterrades 1 und der Drehkoeffizient des rechten Vorderrades und der Drehkoeffizient des rechten Hinterrades betragen -1. Wenn die Drehrichtung gegen den Uhrzeigersinn ist, betragen der Drehkoeffizient des linken Vorderrades und der Drehkoeffizient des linken Hinterrades -1 und der Drehkoeffizient des rechten Vorderrades und der Drehkoeffizient des rechten Hinterrades betragen 1. Es ist darauf hinzuweisen, dass die Einstellung der oben genannten Drehkoeffizienten lediglich zur schematischen Veranschaulichung dient und die vorliegende Anmeldung keine Einschränkungen diesbezüglich darstellt.

Am Beispiel des linken Vorderrades ist der Leistungsbedarf des linken Vorderrades = Zielbelastung des linken Vorderrades × Fahrbahn-Haftungskoeffizient × Vorwärtskopplungs-Korrekturkoeffizient des linken Vorderrades + Öffnungsgrad/100 × Fahrbedarfskoeffizient, wodurch das Vorwärtskopplungsmoment des linken Vorderrades = Leistungsbedarf des linken Vorderrades×Drehkoeffizient des linken Vorderrades ist. Die Berechnungsmethoden für andere Räder sind ähnlich und werden hier nicht einzeln beispielhaft beschrieben.

Beispielhaft handelt es sich bei dem oben genannten Rückkopplungsmoment um ein Moment, das auf der Grundlage der Differenz (d. h. des Fehlers) zwischen der tatsächlichen Radgeschwindigkeit und der Ziel-Radgeschwindigkeit des Rades berechnet und angepasst wird. Dies stellt eine Closed-Loop-Regelungsmethode dar, die von einer Echtzeitüberwachung und Rückmeldung des tatsächlichen Betriebszustands des Rades abhängig ist. Dieses Rückkopplungsmoment kann auf der Grundlage der tatsächlichen Radgeschwindigkeit fein angepasst werden, um Systemabweichungen durch verschiedene Unsicherheitsfaktoren (wie Änderungen der Fahrbahnreibung oder geringfügige Unterschiede in den Fahrzeugkomponenten) zu korrigieren. Dies ermöglicht, dass der tatsächliche Betriebszustand des Rades genau dem Zielzustand folgt, so dass die Genauigkeit und Stabilität der Steuerung einer Wendung des Fahrzeugs auf der Stelle verbessert wird.

In einigen möglichen Implementierungen ist vorgesehen, dass das Chassis-Domänen-Steuergerät eine Drehrichtung für eine Wendung des Fahrzeugs auf der Stelle sowie eine tatsächliche Radgeschwindigkeit und eine Ziel-Radgeschwindigkeit des Rades ermitteln kann. Dann bestimmt es einen zu der Zielbelastung des Rades passenden Vertikalkraft-Korrekturkoeffizienten des Rades und einen zu der tatsächlichen Radgeschwindigkeit des Rades passenden Rückkopplungs-Korrekturkoeffizienten des Rades. Anschließend bestimmt es das Rückkopplungsmoment des Rades auf der Grundlage des Vertikalkraft-Korrekturkoeffizienten des Rades, des Rückkopplungs-Korrekturkoeffizienten des Rades, der tatsächlichen Radgeschwindigkeit des Rades, der Ziel-Radgeschwindigkeit des Rades und der Drehrichtung. Beispielsweise kann das Chassis-Domänen-Steuergerät eine Zuordnungsbeziehung zwischen einerseits dem Vertikalkraft-Korrekturkoeffizienten des Rades, dem Rückkopplungs-Korrekturkoeffizienten des Rades, der tatsächlichen Radgeschwindigkeit des Rades, der Ziel-Radgeschwindigkeit des Rades bzw. der Drehrichtung und andererseits dem Rückkopplungsmoment des Rades voreinstellen. Dann kann es auf der Grundlage dieser Zuordnungsbeziehung das Rückkopplungsmoment jedes der Räder bestimmen.

Dabei ist im Chassis-Domänen-Steuergerät eine Zuordnungstabelle zwischen der Belastung und dem Vertikalkraft-Korrekturkoeffizienten vorab gespeichert. Der Vertikalkraft-Korrekturkoeffizient kann den Einfluss der vom Rad getragenen Belastung auf das Rückkopplungsmoment widerspiegeln und so die Leistungsverteilung optimieren. Beispielsweise verstärkt bei einem Rad mit höherer Belastung eine Erhöhung des Vertikalkraft-Korrekturkoeffizienten das Rückkopplungsmoment dieses Rades, so dass es eine verbesserte Reaktion auf die Steueranweisung aufweisen kann, so dass die Stabilität und Koordination bei einer Wendung des Fahrzeugs auf der Stelle gewährleistet wird. Im Chassis-Domänen-Steuergerät ist ferner eine Zuordnungstabelle zwischen der Radgeschwindigkeit und dem Rückkopplungs-Korrekturkoeffizienten vorab erstellt. Der Rückkopplungs-Korrekturkoeffizienten kann dazu verwendet werden, Steuerungsabweichungen durch die Änderung der tatsächlichen Radgeschwindigkeiten auszugleichen.

Insbesondere kann das Chassis-Domänen-Steuergerät ein anfängliches Rückkopplungsmoment auf der Grundlage des Vertikalkraft-Korrekturkoeffizienten des Rades, der tatsächlichen Radgeschwindigkeit des Rades, der Ziel-Radgeschwindigkeit des Rades und eines voreingestellten Regelalgorithmus ermitteln. Dann bestimmt es das Rückkopplungsmoment des Rades auf der Grundlage des anfänglichen Rückkopplungsmoments, des Rückkopplungs-Korrekturkoeffizienten des Rades und der Drehrichtung.

Beispielhaft kann dieser Regelalgorithmus ein PID-Regelalgorithmus sein. Am Beispiel des linken Vorderrades können der Vertikalkraft-Korrekturkoeffizient des linken Vorderrades und der Rückkopplungs-Korrekturkoeffizient des linken Vorderrades auf der Grundlage der oben genannten Zuordnungstabelle ermittelt werden. Anschließend gilt die folgende Formel: Vertikalkraft-Korrekturkoeffizient des linken Vorderrades × Ziel-Radgeschwindigkeit des linken Vorderrads - tatsächliche Radgeschwindigkeit des linken Vorderrads, wodurch der berechnete Differenzwert als Eingabe für den PID-Regelalgorithmus und dann die Ausgabe des PID-Regelalgorithmus als anfängliches Rückkopplungsmoment des linken Vorderrades dient. Somit ist das Rückkopplungsmoment des linken Vorderrades = anfängliches Rückkopplungsmoment des linken Vorderrades × Rückkopplungs-Korrekturkoeffizient des linken Vorderrades × Drehkoeffizient des linken Vorderrades. Die Berechnungsmethoden für andere Räder sind ähnlich und werden hier nicht einzeln beispielhaft beschrieben.

Es ist darauf hinzuweisen, dass die Ziel-Radgeschwindigkeit jedes der Räder auf der Grundlage eines voreingestellten Radgeschwindigkeits-Regelalgorithmus ermittelt werden kann. Diesbezüglich stellen die Ausführungsbeispiele der vorliegenden Anmeldung keine Einschränkungen dar.

S206: Bestimmen eines Antriebsmoments des Rades auf der Grundlage des Vorwärtskopplungsmoments und des Rückkopplungsmoments des Rades.

In einigen möglichen Implementierungen ist vorgesehen, dass das Chassis-Domänen-Steuergerät Gewichtungskoeffizienten jeweils für das Vorwärtskopplungsmoment und für das Rückkopplungsmoment voreinstellen kann. Anschließend kann es das Antriebsmoment jedes der Räder auf der Grundlage der voreingestellten Gewichtungskoeffizienten, des Vorwärtskopplungsmoments und des Rückkopplungsmoments bestimmen.

In einigen möglichen Implementierungen ist vorgesehen, dass ein Vorwärtskopplungs-Gewichtungskoeffizient und ein Rückkopplungs-Gewichtungskoeffizient des Rades ermittelt werden, und dass das Antriebsmoment des Rades auf der Grundlage des Vorwärtskopplungs-Gewichtungskoeffizienten des Rades, des Rückkopplungs-Gewichtungskoeffizienten des Rades, des Vorwärtskopplungsmoments des Rades und des Rückkopplungsmoments des Rades bestimmt wird.

Beispielhaft charakterisiert der Vorwärtskopplungs-Gewichtungskoeffizient dieses Rades einen Koeffizienten für das Vorwärtskopplungsmoment und der Rückkopplungs-Gewichtungskoeffizient dieses Rades charakterisiert einen Koeffizienten für das Rückkopplungsmoment. Das Chassis-Domänen-Steuergerät kann eine Zuordnungsbeziehung zwischen dem Vorwärtskopplungs-Gewichtungskoeffizienten und einem Einflussfaktor voreinstellen, der einen oder mehrere der folgenden Faktoren umfasst: Belastung, tatsächliche Radgeschwindigkeit, tatsächliche Gierwinkelgeschwindigkeit, tatsächlicher Drehwinkel, Ziel-Drehwinkel. Anschließend kann der Vorwärtskopplungs-Gewichtungskoeffizient jedes der Räder auf der Grundlage dieser Zuordnungsbeziehung ermittelt werden. Der Rückkopplungs-Gewichtungskoeffizient wird auf ähnliche Weise ermittelt und hier nicht wiederholt. Anschließend kann das Chassis-Domänen-Steuergerät den Vorwärtskopplungs-Gewichtungskoeffizienten und den Rückkopplungs-Gewichtungskoeffizienten jedes der Räder auf der Grundlage von Einflussfaktoren für jedes der Räder dynamisch bestimmen. Durch Kombination mit dem Vorwärtskopplungsmoment und dem Rückkopplungsmoment jedes der Räder ergibt sich dann das Antriebsmoment jedes der Räder.

Es ist darauf hinzuweisen, dass der tatsächliche Drehwinkel mittels eines IMU-Sensors und der Ziel-Drehwinkel auf der Grundlage eines voreingestellten Drehwinkel-Regelalgorithmus ermittelt werden kann. Diesbezüglich stellen die Ausführungsbeispiele der vorliegenden Anmeldung keine Einschränkungen dar.

S207: Steuern eines Antriebsmotors des Rades auf der Grundlage des Antriebsmoments des Rades, um eine Wendung des Fahrzeugs auf der Stelle zu ermöglichen.

Es ist darauf hinzuweisen, dass dieser Schritt ähnlich wie der zuvor erwähnte Schritt S104 ist und hier nicht wiederholt wird.

Beim Verfahren zur Steuerung eines Fahrzeugs zur Wendung auf der Stelle gemäß den Ausführungsbeispielen der vorliegenden Anmeldung wird die Masse auf dem Sitz im Fahrzeug, d. h., die Massenverteilung in der Kabine, durch Ermitteln von Geschlecht und Körpertyp aller Insassen bestimmt. Dann wird durch Kombination mit der anfänglichen Belastung jedes der Räder die Zielbelastung jedes der Räder bestimmt, d. h., die Masse in der Kabine wird rational auf jedes der Räder verteilt. Anschließend werden das Vorwärtskopplungsmoment und das Rückkopplungsmoment jedes der Räder auf der Grundlage der Zielbelastung jedes der Räder bestimmt. Schließlich ergibt sich das Antriebsmoment jedes der Räder und somit wird der Antriebsmotor jedes der Räder gesteuert, um eine Wendung des Fahrzeugs auf der Stelle zu ermöglichen. Auf diese Weise kann nicht nur der Einfluss der Massenverteilung in der Fahrzeugkabine auf das Antriebsmoment jedes der Räder berücksichtigt werden, sondern das Vorwärtskopplungsmoment und das Rückkopplungsmoment jedes der Räder können auch jeweils durch eine Open-Loop- bzw. Closed-Loop-Regelung ermittelt werden. Unter Berücksichtigung von radspezifischen Einflussfaktoren wie der Belastung jedes der Räder, der tatsächlichen Radgeschwindigkeit, der Ziel-Radgeschwindigkeit, der Drehrichtung, dem tatsächlichen Drehwinkel, dem Ziel-Drehwinkel und anderen Einflussfaktoren werden zudem das Vorwärtskopplungsmoment und das Rückkopplungsmoment jedes der Räder angepasst, wodurch gemeinsam ein präzises Antriebsmoment erzielt wird. Dadurch wird die Genauigkeit des Antriebsmoments verbessert, so dass wiederum die Wirkung der Steuerung einer Wendung auf der Stelle und die Robustheit unter unterschiedlichen Betriebsbedingungen (Einflussfaktoren) verbessert werden.

Fig. 4 zeigt eine schematische Strukturdarstellung einer Einrichtung zur Steuerung eines Fahrzeugs zur Wendung auf der Stelle gemäß der vorliegenden Anmeldung. Wie in Fig. 4 gezeigt, umfasst die Einrichtung 300 zur Steuerung eines Fahrzeugs zur Wendung auf der Stelle gemäß diesem Ausführungsbeispiel der vorliegenden Anmeldung:
ein Ermittlungsmodul 301, das dazu verwendet wird, eine Masse auf einem Sitz im Fahrzeug und eine anfängliche Belastung eines Rades in Reaktion auf eine Anweisung zur Wendung auf der Stelle zu ermitteln, wobei die anfängliche Belastung auf der Grundlage einer tatsächlichen Radgeschwindigkeit des Rades und der Chassis-Dynamik berechnet wird;
ein Bestimmungsmodul 302, das dazu verwendet wird, eine Zielbelastung des Rades auf der Grundlage der Masse auf dem Sitz und der anfänglichen Belastung des Rades zu bestimmen; und
ein Steuerungsmodul 303, das dazu verwendet wird, ein Antriebsmoment des Rades auf der Grundlage der Zielbelastung des Rades zu bestimmen; und einen Antriebsmotor des Rades auf der Grundlage des Antriebsmoments des Rades zu steuern, um eine Wendung des Fahrzeugs auf der Stelle zu ermöglichen.

In einer möglichen Ausführungsform wird das Steuerungsmodul 303 spezifisch dazu verwendet,
ein Vorwärtskopplungsmoment und ein Rückkopplungsmoment des Rades auf der Grundlage der Zielbelastung des Rades zu bestimmen; und
das Antriebsmoment des Rades auf der Grundlage des Vorwärtskopplungsmoments und des Rückkopplungsmoments des Rades zu bestimmen.

In einer möglichen Ausführungsform wird das Steuerungsmodul 303 spezifisch dazu verwendet,
einen Öffnungsgrad eines Beschleunigungspedals des Fahrzeugs, eine tatsächliche Radgeschwindigkeit des Rades, eine Drehrichtung für die Wendung auf der Stelle und einen aktuellen Fahrbahn-Haftungskoeffizienten zu ermitteln; und
das Vorwärtskopplungsmoment des Rades auf der Grundlage der Zielbelastung des Rades, des Öffnungsgrades, der tatsächlichen Radgeschwindigkeit des Rades, der Drehrichtung und des Fahrbahn-Haftungskoeffizienten zu bestimmen.

In einer möglichen Ausführungsform wird das Steuerungsmodul 303 spezifisch dazu verwendet,
einen zu der tatsächlichen Radgeschwindigkeit des Rades passenden Vorwärtskopplungs-Korrekturkoeffizienten des Rades und einen zu dem Öffnungsgrad passenden Fahrbedarfskoeffizienten zu bestimmen;
einen Leistungsbedarf des Rades auf der Grundlage der Zielbelastung des Rades, des Fahrbahn-Haftungskoeffizienten, des Vorwärtskopplungs-Korrekturkoeffizienten des Rades, des Öffnungsgrades und des Fahrbedarfskoeffizienten zu bestimmen; und
das Vorwärtskopplungsmoment des Rades auf der Grundlage des Leistungsbedarfs und der Drehrichtung zu bestimmen.

In einer möglichen Ausführungsform wird das Steuerungsmodul 303 spezifisch dazu verwendet,
eine Drehrichtung für eine Wendung des Fahrzeugs auf der Stelle sowie eine tatsächliche Radgeschwindigkeit und eine Ziel-Radgeschwindigkeit des Rades zu ermitteln;
einen zu der Zielbelastung des Rades passenden Vertikalkraft-Korrekturkoeffizienten des Rades zu bestimmen; und einen zu der tatsächlichen Radgeschwindigkeit des Rades passenden Rückkopplungs-Korrekturkoeffizienten des Rades zu bestimmen; und
das Rückkopplungsmoment des Rades auf der Grundlage des Vertikalkraft-Korrekturkoeffizienten des Rades, des Rückkopplungs-Korrekturkoeffizienten des Rades, der tatsächlichen Radgeschwindigkeit des Rades, der Ziel-Radgeschwindigkeit des Rades und der Drehrichtung zu bestimmen.

In einer möglichen Ausführungsform wird das Steuerungsmodul 303 spezifisch dazu verwendet,
ein anfängliches Rückkopplungsmoment auf der Grundlage des Vertikalkraft-Korrekturkoeffizienten des Rades, der tatsächlichen Radgeschwindigkeit des Rades, der Ziel-Radgeschwindigkeit des Rades und eines voreingestellten Regelalgorithmus zu ermitteln; und
das Rückkopplungsmoment des Rades auf der Grundlage des anfänglichen Rückkopplungsmoments, des Rückkopplungs-Korrekturkoeffizienten des Rades und der Drehrichtung zu bestimmen.

In einer möglichen Ausführungsform wird das Steuerungsmodul 303 spezifisch dazu verwendet,
einen Vorwärtskopplungs-Gewichtungskoeffizienten und einen Rückkopplungs-Gewichtungskoeffizienten des Rades zu ermitteln; und
das Antriebsmoment des Rades auf der Grundlage des Vorwärtskopplungs-Gewichtungskoeffizienten des Rades, des Rückkopplungs-Gewichtungskoeffizienten des Rades, des Vorwärtskopplungsmoments des Rades und des Rückkopplungsmoments des Rades zu bestimmen.

In einer möglichen Ausführungsform wird das Bestimmungsmodul 302 spezifisch dazu verwendet,
die Masse auf dem Sitz und die anfängliche Belastung des Rades in ein voreingestelltes Belastungsverteilungsmodell einzugeben, wodurch die Zielbelastung des Rades ausgegeben wird.

In einer möglichen Ausführungsform wird das Ermittlungsmodul 301 spezifisch dazu verwendet,
Geschlecht und Körpertyp aller Insassen im Fahrzeug sowie deren Sitzen zu ermitteln; und
die Masse auf dem Sitz auf der Grundlage des Geschlechtes und Körpertyps des Insassen sowie dessen Sitz zu bestimmen.

Die Einrichtung zur Steuerung eines Fahrzeugs zur Wendung auf der Stelle gemäß diesem Ausführungsbeispiel kann das Verfahren gemäß den vorstehend beschriebenen Verfahrensausführungsbeispielen ausführen, wobei das Implementierungsprinzip und die technischen Effekte ähnlich sind und in diesem Ausführungsbeispiel nicht wiederholt werden.

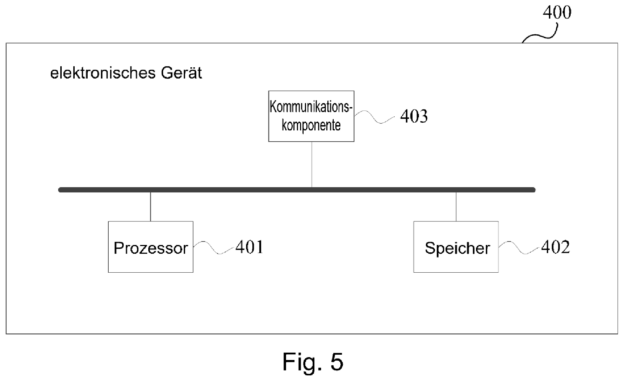

Fig. 5 zeigt eine schematische Strukturdarstellung eines elektronischen Geräts gemäß der vorliegenden Anmeldung. Wie in Fig. 5 gezeigt, umfasst das elektronische Gerät 400 gemäß dem vorliegenden Ausführungsbeispiel: mindestens einen Prozessor 401 und einen Speicher 402. Optional umfasst das elektronische Gerät 400 ferner eine Kommunikationskomponente 403. Dabei können der Prozessor 401, der Speicher 402 und die Kommunikationskomponente 403 über einen Bus miteinander verbunden sein. Das elektronische Gerät kann beispielsweise das oben genannte Chassis-Domänen-Steuergerät sein.

In einem spezifischen Implementierungsvorgang führt der mindestens eine Prozessor 401 die im Speicher 402 gespeicherten computerausführbaren Anweisungen aus, so dass der mindestens eine Prozessor 401 das vorstehend beschriebene Verfahren ausführt.

Der spezifische Umsetzungsvorgang des Prozessors 401 kann auf das obige Verfahrensausführungsbeispiel verwiesen sein, dessen Umsetzungsprinzipien und technische Auswirkungen ähnlich sind und hierbei im vorliegenden Ausführungsbeispiel nicht mehr wiederholt werden.

In dem obigen Ausführungsbeispiel ist es zu verstehen, dass der Prozessor eine zentrale Verarbeitungseinheit (Englisch: Central Processing Unit, kurz: CPU) sein kann. Alternativ kann er ein anderer universaler Prozessor, ein digitaler Signalprozessor (Englisch: Digital Signal Processor, kurz: DSP), eine anwendungsspezifische integrierte Schaltung (Englisch: Application Specific Integrated Circuit, kurz: ASIC) usw. sein. Der universale Prozessor kann ein Mikroprozessor sein oder er kann unter anderem auch ein beliebiger herkömmlicher Prozessor sein. Die Schritte des im Zusammenhang mit der vorliegenden Erfindung offenbarten Verfahrens können unmittelbar durch einen Hardware-Prozessor vollständig durchgeführt werden oder mittels einer Kombination der Hardware mit Softwaremodulen im Prozessor durchgeführt werden.

Der Speicher kann einen Hochgeschwindigkeitsspeicher (Random Access Memory, RAM) und ferner einen nichtflüchtigen Speicher (Non-volatile Memory, NVM), beispielsweise mindestens einen Magnetplattenspeicher, umfassen.

Bei dem Bus kann es sich um einen Industry-Standard-Architecture (ISA)-Bus, einen Peripheral-Component-Interconnect (PCI)-Bus oder einen Extended-Industry-Standard-Architecture (EISA)-Bus usw. handeln. Die Busse können in einen Adressenbus, einen Datenbus, einen Steuerungsbus, usw. unterteilt werden. Zum Erleichtern der Darstellung sind die Busse in den Zeichnungen der vorliegenden Anmeldung nicht auf nur einen einzigen Bus oder eine einzige Art von Bussen beschränkt.

Die vorliegende Anmeldung stellt ferner ein Computerprogrammprodukt bereit, das ein Computerprogramm umfasst, das bei dessen Ausführen durch einen Prozessor das obige Verfahren verwirklicht.

Durch die vorliegende Anmeldung wird ferner ein computerlesbares Speichermedium bereitgestellt, auf dem computerausführbare Anweisungen gespeichert sind. Wenn der Prozessor die computerausführbaren Anweisungen ausführt, kann das vorstehend beschriebene Verfahren implementiert werden.

Das oben erwähnte lesbare Speichermedium kann durch ein flüchtiges oder nichtflüchtiges Speichergerät eines beliebigen Typs, wie z. B. statisches Random-Access-Memory (SRAM), Electrically-Erasable-Programmable-Read-Only-Memory (EEPROM), Erasable-Programmable-Read-Only-Memory (EPROM), Programmable-Read-Only-Memory (PROM), Read-Only-Memory (ROM), magnetischen Speicher, Flash-Speicher, Magnetdiskette oder optische Disk, oder eine Kombination davon erzielt werden. Das lesbare Speichermedium kann ein beliebiges Medium sein, das von einem universellen oder dedizierten Computer zugegriffen werden kann.

Ein beispielhaftes lesbares Speichermedium kann mit einem Prozessor gekoppelt werden, so dass der Prozessor Informationen von dem lesbaren Speichermedium auslesen und darin Informationen schreiben kann. Selbstverständlich kann das lesbare Speichermedium auch ein Bestandteil des Prozessors sein. Der Prozessor und das lesbare Speichermedium können sich in einem anwendungsspezifischen integrierten Schaltkreis (Englisch: Application Specific Integrated Circuit, kurz: ASIC) befinden. Selbstverständlich können der Prozessor und das lesbare Speichermedium auch als diskrete Komponenten in dem Gerät vorliegen.

Die Aufteilung der Einheiten stellt nur eine logische Funktionsteilung dar, wobei bei der tatsächlichen Implementierung andere Aufteilungsarten verwendbar sind, wobei beispielsweise mehrere Einheiten oder Komponenten miteinander kombinierbar oder in ein weiteres System integrierbar sind, oder wobei einige Merkmale weggelassen oder nicht durchgeführt werden können. Ferner können die angezeigten oder diskutierten gegenseitigen Kopplungen oder direkten Kopplungen oder Kommunikationsverbindungen eine indirekte Kopplung oder Kommunikationsverbindung über einige Schnittstellen, Einrichtungen oder Einheiten sein, und können elektrisch und mechanisch sein oder andere Formen annehmen.

Eine als separates Element erläuterte Einheit kann physikalisch getrennt oder physikalisch nicht getrennt sein, ein als Einheit angezeigtes Element kann eine physikalische Einheit oder keine physikalische Einheit sein, nämlich kann sie sich an einem Ort befinden oder auf mehreren Netzwerkeinheiten verteilt sein. Einige oder alle Einheiten darunter können gemäß den tatsächlichen Bedürfnissen ausgewählt werden, um den Zweck der Ausgestaltungen der vorliegenden Ausführungsbeispiele zu erzielen.

Außerdem können alle Funktionseinheiten in einzelnen Ausführungsbeispielen der vorliegenden Erfindung in eine Verarbeitungseinheit integriert sein, oder jede Funktionseinheit kann allein physisch existieren, oder zwei oder mehr als zwei der genannten Funktionseinheiten können in eine Einheit integriert sein.

Wenn die Funktion in Form einer Funktionseinheit der Software realisiert wird und als separates Produkt verkauft oder verwendet wird, kann sie in einem computerlesbaren Speichermedium gespeichert werden. Basierend auf diesem Verständnis kann der Teil der technischen Ausgestaltungen der vorliegenden Erfindung, der wesentlich ist bzw. zum Stand der Technik beiträgt, oder ein Teil dieser technischen Ausgestaltungen in Form eines Softwareprodukts ausgeführt sein, das auf einem Speichermedium gespeichert ist und einige Anweisungen enthält, um ein Computergerät, das ein Personalcomputer, ein Server oder ein Netzwerkgerät usw. sein kann, zu veranlassen, alle oder einen Teil der Schritte des Verfahrens in verschiedenen Ausführungsbeispielen der vorliegenden Erfindung durchzuführen. Darüber hinaus umfasst das vorangehende Speichermedium: USB-Disk, Wechselfestplatte, Read-Only-Memory (ROM), Random-Access-Memory (RAM), Magnetplatte, optische Disk, und verschiedene Medien, die Programmcodes speichern können.

Die durchschnittlichen Fachleute auf diesem Gebiet können verstehen: Alle oder einige der Schritte für jeweilige oben beschriebene Verfahrensausführungsbeispiele können durch ein Programm über Anweisungen an relevante Hardware umgesetzt werden. Das vorangehende Programm kann in einem computerlesbaren Speichermedium gespeichert sein. Beim Ausführen des Programms werden Schritte, die die jeweiligen oben beschriebenen Verfahrensausführungsbeispiele umfassen, ausgeführt. Darüber hinaus umfasst das vorangehende Speichermedium: ROM, RAM, Diskette oder optische Disk und verschiedene andere Medien, in denen Programmcodes gespeichert werden können.

Abschließend sollte es darauf hingewiesen sein, dass für die Fachleute auf diesem Gebiet nach dem Implementieren der hierin offenbarten Erfindung unter Berücksichtigung der Beschreibung andere Ausführungsmöglichkeiten der vorliegenden Erfindung naheliegend sind. Die vorliegende Anmeldung zielt darauf ab, jegliche Varianten, Verwendungen oder adaptive Änderungen der vorliegenden Erfindung abzudecken, und solche Varianten, Verwendungen oder adaptive Änderungen folgen den allgemeinen Prinzipien der vorliegenden Erfindung und umfassen allgemein bekanntes Fachwissen oder gewöhnliches technisches Mittel, das in der vorliegenden Erfindung nicht offenbart ist, auf diesem Gebiet. Die vorliegende Erfindung ist nicht auf die oben beschriebenen und in den Figuren dargestellten genauen Strukturen beschränkt und kann auf verschiedene Weisen modifiziert bzw. verändert werden, ohne von ihrem Umfang abzuweichen. Der Umfang der vorliegenden Erfindung ist lediglich durch die beigefügten Ansprüche definiert.

## Patentansprüche

1. Verfahren zur Steuerung eines Fahrzeugs zur Wendung auf der Stelle, **dadurch gekennzeichnet, dass** es umfasst:
Ermitteln einer Masse auf einem Sitz im Fahrzeug und einer anfänglichen Belastung eines Rades in Reaktion auf eine Anweisung zur Wendung auf der Stelle, wobei die anfängliche Belastung auf der Grundlage einer tatsächlichen Radgeschwindigkeit des Rades und der Chassis-Dynamik berechnet wird;
Bestimmen einer Zielbelastung des Rades auf der Grundlage der Masse auf dem Sitz und der anfänglichen Belastung des Rades;
Bestimmen eines Antriebsmoments des Rades auf der Grundlage der Zielbelastung des Rades; und Steuern eines Antriebsmotors des Rades auf der Grundlage des Antriebsmoments des Rades, um eine Wendung des Fahrzeugs auf der Stelle zu ermöglichen.

2. Verfahren nach Anspruch 1, **dadurch gekennzeichnet, dass** das Bestimmen eines Antriebsmoments des Rades auf der Grundlage der Zielbelastung des Rades umfasst:
Bestimmen eines Vorwärtskopplungsmoments und eines Rückkopplungsmoments des Rades auf der Grundlage der Zielbelastung des Rades; und
Bestimmen des Antriebsmoments des Rades auf der Grundlage des Vorwärtskopplungsmoments und des Rückkopplungsmoments des Rades.

3. Verfahren nach Anspruch 2, **dadurch gekennzeichnet, dass** das Bestimmen eines Vorwärtskopplungsmoments des Rades auf der Grundlage der Zielbelastung des Rades umfasst:
Ermitteln eines Öffnungsgrades eines Beschleunigungspedals des Fahrzeugs, einer tatsächlichen Radgeschwindigkeit des Rades, einer Drehrichtung für die Wendung auf der Stelle und eines aktuellen Fahrbahn-Haftungskoeffizienten; und
Bestimmen des Vorwärtskopplungsmoments des Rades auf der Grundlage der Zielbelastung des Rades, des Öffnungsgrades, der tatsächlichen Radgeschwindigkeit des Rades, der Drehrichtung und des Fahrbahn-Haftungskoeffizienten.

4. Verfahren nach Anspruch 3, **dadurch gekennzeichnet, dass** das Bestimmen des Vorwärtskopplungsmoments des Rades auf der Grundlage der Zielbelastung des Rades, des Öffnungsgrades, der tatsächlichen Radgeschwindigkeit des Rades, der Drehrichtung und des Fahrbahn-Haftungskoeffizienten umfasst:
Bestimmen eines zu der tatsächlichen Radgeschwindigkeit des Rades passenden Vorwärtskopplungs-Korrekturkoeffizienten des Rades und eines zu dem Öffnungsgrad passenden Fahrbedarfskoeffizienten;
Bestimmen eines Leistungsbedarfs des Rades auf der Grundlage der Zielbelastung des Rades, des Fahrbahn-Haftungskoeffizienten, des Vorwärtskopplungs-Korrekturkoeffizienten des Rades, des Öffnungsgrades und des Fahrbedarfskoeffizienten; und
Bestimmen des Vorwärtskopplungsmoments des Rades auf der Grundlage des Leistungsbedarfs und der Drehrichtung.

5. Verfahren nach Anspruch 2, **dadurch gekennzeichnet, dass** das Bestimmen eines Rückkopplungsmoments des Rades auf der Grundlage der Zielbelastung des Rades umfasst:
Ermitteln einer Drehrichtung für eine Wendung des Fahrzeugs auf der Stelle sowie einer tatsächlichen Radgeschwindigkeit und einer Ziel-Radgeschwindigkeit des Rades;
Bestimmen eines zu der Zielbelastung des Rades passenden Vertikalkraft-Korrekturkoeffizienten des Rades; und Bestimmen eines zu der tatsächlichen Radgeschwindigkeit des Rades passenden Rückkopplungs-Korrekturkoeffizienten des Rades; und
Bestimmen des Rückkopplungsmoments des Rades auf der Grundlage des Vertikalkraft-Korrekturkoeffizienten des Rades, des Rückkopplungs-Korrekturkoeffizienten des Rades, der tatsächlichen Radgeschwindigkeit des Rades, der Ziel-Radgeschwindigkeit des Rades und der Drehrichtung.

6. Verfahren nach Anspruch 5, **dadurch gekennzeichnet, dass** das Bestimmen des Rückkopplungsmoments des Rades auf der Grundlage des Vertikalkraft-Korrekturkoeffizienten des Rades, des Rückkopplungs-Korrekturkoeffizienten des Rades, der tatsächlichen Radgeschwindigkeit des Rades, der Ziel-Radgeschwindigkeit des Rades und der Drehrichtung umfasst:
Ermitteln eines anfänglichen Rückkopplungsmoments auf der Grundlage des Vertikalkraft-Korrekturkoeffizienten des Rades, der tatsächlichen Radgeschwindigkeit des Rades, der Ziel-Radgeschwindigkeit des Rades und eines voreingestellten Regelalgorithmus; und
Bestimmen des Rückkopplungsmoments des Rades auf der Grundlage des anfänglichen Rückkopplungsmoments, des Rückkopplungs-Korrekturkoeffizienten des Rades und der Drehrichtung.

7. Verfahren nach Anspruch 2, **dadurch gekennzeichnet, dass** das Bestimmen des Antriebsmoments des Rades auf der Grundlage des Vorwärtskopplungsmoments und des Rückkopplungsmoments des Rades umfasst:
Ermitteln eines Vorwärtskopplungs-Gewichtungskoeffizienten und eines Rückkopplungs-Gewichtungskoeffizienten des Rades; und
Bestimmen des Antriebsmoments des Rades auf der Grundlage des Vorwärtskopplungs-Gewichtungskoeffizienten des Rades, des Rückkopplungs-Gewichtungskoeffizienten des Rades, des Vorwärtskopplungsmoments des Rades und des Rückkopplungsmoments des Rades.

8. Verfahren nach Anspruch 1, **dadurch gekennzeichnet, dass** das Bestimmen einer Zielbelastung des Rades auf der Grundlage der Masse auf dem Sitz und der anfänglichen Belastung des Rades umfasst:
Eingeben der Masse auf dem Sitz und der anfänglichen Belastung des Rades in ein voreingestelltes Belastungsverteilungsmodell, wodurch die Zielbelastung des Rades ausgegeben wird.

9. Verfahren nach einem der Ansprüche 1 bis 8, **dadurch gekennzeichnet, dass** das Ermitteln einer Masse auf einem Sitz im Fahrzeug umfasst:
Ermitteln von Geschlecht und Körpertyp aller Insassen im Fahrzeug sowie deren Sitzen; und
Bestimmen der Masse auf dem Sitz auf der Grundlage des Geschlechtes und Körpertyps des Insassen sowie dessen Sitzes.

10. Einrichtung zur Steuerung eines Fahrzeugs zur Wendung auf der Stelle, **dadurch gekennzeichnet, dass** sie umfasst:
ein Ermittlungsmodul, das dazu verwendet wird, eine Masse auf einem Sitz im Fahrzeug und eine anfängliche Belastung eines Rades in Reaktion auf eine Anweisung zur Wendung auf der Stelle zu ermitteln, wobei die anfängliche Belastung auf der Grundlage einer tatsächlichen Radgeschwindigkeit des Rades und der Chassis-Dynamik berechnet wird;
ein Bestimmungsmodul, das dazu verwendet wird, eine Zielbelastung des Rades auf der Grundlage der Masse auf dem Sitz und der anfänglichen Belastung des Rades zu bestimmen; und
ein Steuerungsmodul, das dazu verwendet wird, ein Antriebsmoment des Rades auf der Grundlage der Zielbelastung des Rades zu bestimmen; und einen Antriebsmotor des Rades auf der Grundlage des Antriebsmoments des Rades zu steuern, um eine Wendung des Fahrzeugs auf der Stelle zu ermöglichen.

11. Elektronisches Gerät, **dadurch gekennzeichnet, dass** sie umfasst: einen Speicher und einen Prozessor,
wobei in dem Speicher computerausführbare Anweisungen gespeichert sind,
und wobei der Prozessor die in dem Speicher gespeicherten computerausführbaren Anweisungen ausführt, um das Durchführen eines Verfahrens nach einem der Ansprüche 1 bis 9 durch den Prozessor zu ermöglichen.

12. Computerlesbares Speichermedium, **dadurch gekennzeichnet, dass** in dem computerlesbaren Speichermedium computerausführbare Anweisungen gespeichert sind, die bei ihrem Ausführen durch einen Prozessor zur Implementierung eines Verfahrens nach einem der Ansprüche 1 bis 9 verwendet werden.
